# EUROPEAN PATENT SPECIFICATION

(11) **EP 2 822 357 B1**
(45) Date of publication and mention of the grant of the patent: **31.03.2021**
(21) Application number: 13174884.0
(22) Date of filing: 03.07.2013
(51) Int. Cl.: H05B 6/12

(54) **Power saving induction cooking plate, cooking vessel and induction cooking arrangement**
Energiesparende Induktionskochplatte, Kochgefäss und Induktionskochanordnung
Plaque de cuisson à induction d'économie d'énergie, récipient de cuisson et dispositif de cuisson par induction

(43) Date of publication of application: 07.01.2015
(73) Proprietor: Electrolux Appliances Aktiebolag, 105 45 Stockholm (SE)
(72) Inventor: Burkhardt, Jennifer, 91541 Rothenburg o. d. Tauber (DE); Herzog, Michael, 91541 Rothenburg ob der Tauber (DE); Katz, Felix-Alexander, 71263 Weil der Stadt (DE); Meider, Maike, 91541 Rothenburg ob der Tauber (DE)
(74) Representative: Electrolux Group Patents

(56) References cited:
- WO-A1-2010/080738
- WO-A1-2010/081637
- WO-A2-2011/055043
- DE-A1- 3 602 666
- JP-A- 2008 166 088
- KR-A- 20100 010 593
- US-A- 6 051 821

## Description

The present invention relates to an induction cooking plate according to the preamble of claim 1.

In modern households, cooking appliances in the form of electric ovens or gas ovens are almost present everywhere. In recent times, electric ovens are developing in the direction of induction powered cooking plates. This form of an electric heating mechanism has the advantage that it only heats the cooking vessel and thus has a low heat inertia.

Power consumption concerns also become more important in households as electric energy becomes more and more expensive. As a consequence, home appliance manufacturers strive to develop home appliances that consume less energy. In some countries, such as Germany, energy grades have been established in order to give a potential customer an indication about the energy efficiency of the device he is intending to buy.

In particular in the area of cooking devices, energy consumption is of predominant concern.

Induction powered cooking plates are per se known in the art. The page shown under the URL

"http://www.smalltao.com/product/18269636015/Electrical%20Tecworld%20TIANHE%20TH-A207%20Cooker%20generation%20product%20special%20radiation-free%20high-frequency%20stove"

shows an induction heater with wedges on the top. It appears that these wedges serve to position a cooking vessel. One of the pictures to be found for further illustration of the product show the text *"hot after use, do not touch".*

WO 2010/081637 A1 discloses an induction cooking hob with a cover plate and heating elements beneath said cover plate. The cover plate includes bumps in the vicinity of the heating elements in order to arrange a cooking vessel upon said bumps. The cooking vessel is spaced from the cover plate, so that a thermal isolation is formed between said cooking vessel and cover plate.

DE36 02 666 A1 discloses an induction cooking plate according to the preamble of claim 1.

The applicant has realized that at conventional induction heaters energy can be saved.

It is an object of the present invention to provide a power saving cooking plate.

This object is solved by an induction cooking plate according to claim 1.

According to the present invention the induction cooking plate is provided with separate induction cooking areas, each having a border formed of a curvature around them, so that a cooking pot is kept at a certain distance to optimally insulate it from the exterior surface of the cooking plate while at the same time high frequency energy is allowed to be transmitted into the bottom of the cooking pot, wherein optionally said induction cooking area comprises a layer of heat insulating material, so that a flat surface of the induction cooking plate is provided.

Advantageous embodiments are given in the dependent claims.

Advantageously, an induction cooking plate according to the present invention avoids that heat is transferred from a cooking good which is kept in a cooking vessel to a surface that supports an induction heating arrangement. In this manner, the thermal inertia is minimized and only the cooking vessel including the cooking goods is heated which minimizes the mass that needs to be heated and thus minimizes the power that is used for cooking.

Beneficially, in a further development of a cooking plate according to the instant invention, an isolated material is embedded in a cooking surface in order to disrupt the thermal energy flow back from the cooking vessel into the cooking surface. At the same time, advantageously, a flat cooking surface can be maintained that allows moving cooking pots back and forth without obstacles.

Favourably, according to an embodiment which is not part of the present invention, spacers are provided to keep a cooking vessel in a distance to the inductive heater. In this manner, with a technically simple solution, the object of the invention can be solved and by using thermally isolating spacers, a maximum effect can be achieved.

Favourably, according to an embodiment which is not part of the present invention, plural spacers are provided. In this manner, the cooking plate can be individually adapted to the size of the shape of a cooking vessel.

Beneficially, according to a further development which is not part of the present invention, the area occupied by the spacers is very small against the area of the cooking plate that usually conforms with the size of a cooking pot because in this manner, the thermal conduction back into the cooking surface can be minimized.

Beneficially, according to a further development which is not part of the present invention, a cooking surface of a cooking plate has build-in spacers in a form of e.g. a protrusion. In this manner, an easy to clean monolithic surface is maintained while at the same time being able to benefit from the power savings provided by the present invention.

Favourably, according to a further development of an embodiment of the present invention, a curvature is provided in the cooking plate because curvatures are technically easy to manufacture, avoid steps in the surface and are easy to clean.

Particularly beneficial is a further development of an embodiment of the present invention where the curvature protrudes at least 10 mm from a flat surface of a cooking plate because it then provides an optimum distance between the cooking vessel and the flat cooking surface in order to maximally avoid thermal conduction while at the same time providing optimum inductive heating efficiency.

Beneficially, according to a further development of an embodiment of the present invention, a cooking plate comprises plural induction cooking areas. In this manner, the benefits of the instant invention can be provided for a household appliance and thus multiply the energy savings.

Favourably, according to a further development which is not part of the present invention, spacers extend over plural inductive areas. In this manner, beneficially, larger cooking vessels can be used and benefit from the advantages of the present invention.

Advantageously, according to a further development which is not part of the present invention, the spacers are provided in form of bands that allow easy movement of a cooking vessel in the longitudinal direction of the bands.

Favourably, in a further development of an embodiment according to the present invention, isolation material is made of heat resistive material such as glass ceramic. In this manner, maximum disruption of a thermal energy flow can be achieved.

Advantageously, a cooking vessel according to an embodiment which is not part of the present invention, has a bottom/spacer made of heat resistive material especially glass ceramic.

Advantageously, in this manner, a spacer is provided and integral with the cooking vessel. Such a cooking vessel also provides a maximum of ease of use for an operator.

Favourably, a cooking vessel according to an embodiment of the instant invention maybe respectively equipped with an isolation material of various shapes in order to be adapted to its daily use and to the technical requirements for such a cooking vessel, e.g. a cordless kettle.

Beneficially, a cooking arrangement according to an embodiment of the present invention comprises an induction cooking plate, a spacer made from thermally resistant material and a cooking plate. In this manner, a simple technical arrangement in form of different layers is provided that has the merits of the power saving according to the instant invention.

Further below, embodiments are discussed on a basis of examples shown in drawings wherein:
- Fig. 1: shows a cooking plate;
- Fig. 2: shows a section of an induction oven;
- Fig. 3: shows two examples of a cooking surface having spacers;
- Fig. 4: shows a cooking vessel in the form of a cordless kettle; and
- Fig. 5: shows different shapes of spacers at the bottom of the cooking vessel shown in Fig. 4.

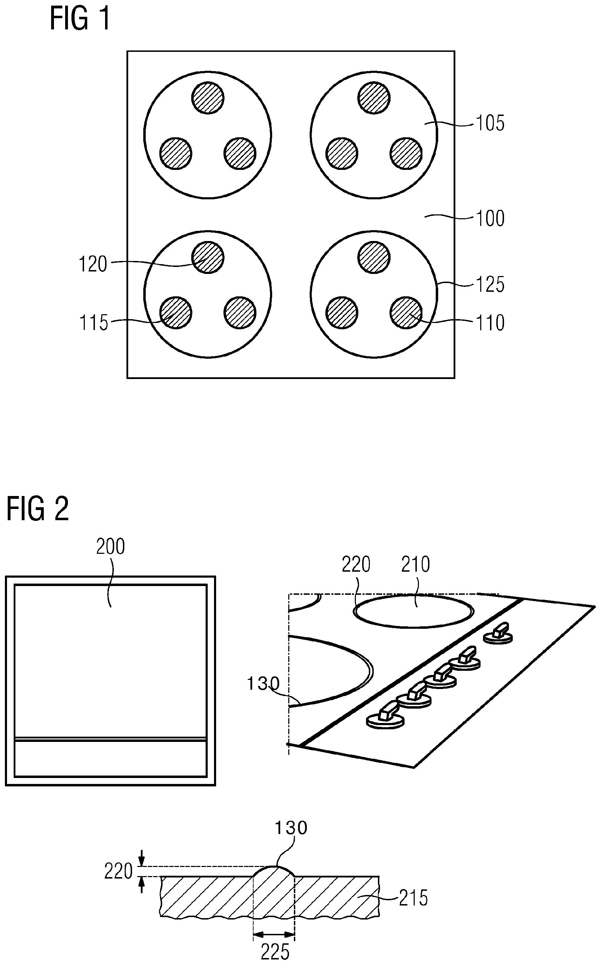

As Fig. 1 shows, a cooking plate or hob 100 may consist of several individual induction cooking areas 125. In this example, each cooking area 125 is provided with spacers made from for example heat resistive material. The Applicant has found that spacers can save energy. The better the material prevents thermal conduction, the more efficient the cooking plate according to the present invention becomes. In this embodiment which is not part of the present invention, spacers 110-120 are provided in the number of 3 having a circular shape. The shape of these spacers is only shown exemplarily and may take any other form that is suitable for the desired application. As long as the spacers allow the magnetic field from the induction heater to penetrate a metallic cooking vessel and prevent thermal energy to flow back into a cooking surface 105.

As Fig. 2 shows an embodiment of the present invention, an induction oven shown in the section 200 may be provided with separate cooking areas 210 having a border 130 around them. In one embodiment, the cooking area 210 may be comprised of a layer of heat insulating material that is preferably made of thermally resistive material. In this manner, a totally flat surface of the hob can be provided that allows easy movement of pots from one cooking area to another. In one preferable embodiment, the border of the cooking area 210 may be formed of a curvature that is 10 mm high and has a radius of preferably 2.5 mm and a width of 5 mm as indicated with 225 and 220 in the cross-section 215 of Fig. 2. Of course, other dimensions can be conceived that however must satisfy the criteria that they keep a cooking pot at a certain distance to optimally insulate it from the cooking surface 220 while at the same time allowing high frequency energy to be transmitted into e.g. the bottom of the cooking pot. Preferably, the material of the cooking hob is glass ceramics.

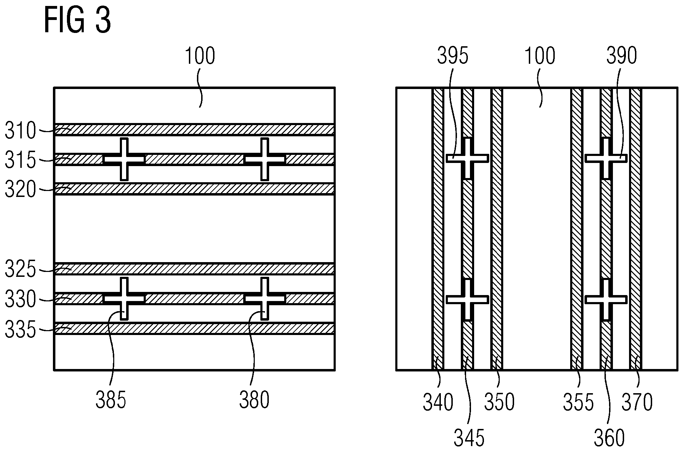

Fig. 3 shows another example of an embodiment of a cooking plate 100 which is not part of the present invention. Here, the cooking plate 100 comprises spacers 310-370. At the left of the square shaped cooking areas shown in Fig. 3, the spacers 310-335 are oriented horizontally thereby allowing easy movement of cooking pots e.g. between cooking areas 385 and 380. On the other hand, on the right-hand part of Fig. 3, the spacers in form of bands 340-370 covering plural cooking areas 390 and 395 allow easy movement of cooking vessels in the vertical direction and also provide support for cooking vessels with a large bottom that extends e.g. over two cooking areas. In this manner, the invention can provide up to 4% energy savings as energy measurements show.

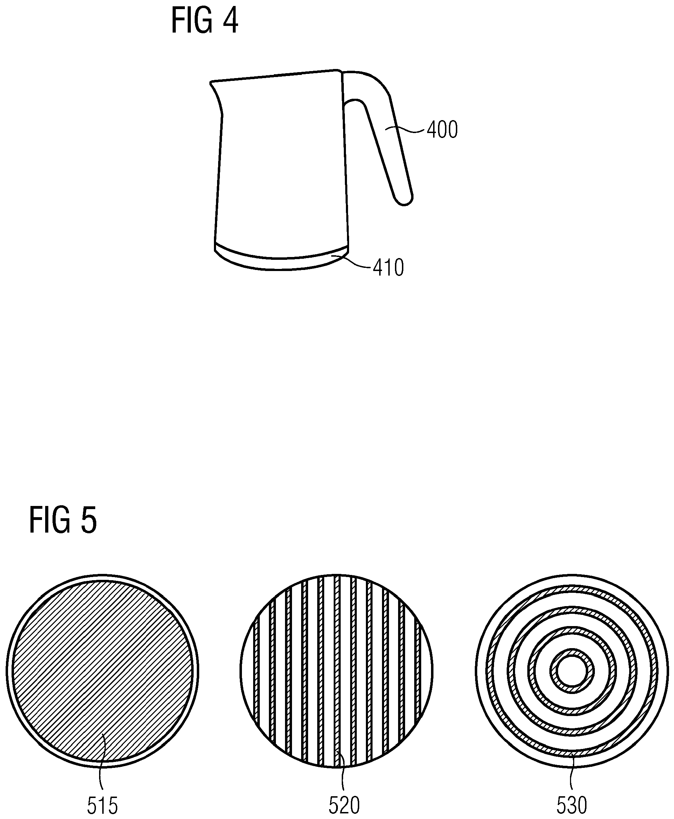

Fig. 4 shows a cooking vessel 400 having a bottom/ spacer made of thermal insulating material in particular a material having a high thermal resistance to block energy flow from e.g. water boiled inside e.g. the kettle to the surface of an induction heater such as glass ceramic. The width of the bottom 410 is approximately 10 mm to provide optimum isolation while at the same time allowing full penetration of high frequency waves generated by the induction heater.

As Fig. 5 shows, the bottom/ spacer of the vessel 400 shown in Fig. 4 may form different kinds of spacers having different shapes. As indicated with 515, a complete layer of insulating material covers the bottom. On the other hand, marked by 520, bands of insulating spacers are arranged in parallel along the total area of the bottom of the cooking vessel 400. The number and distance of these bands of isolating spacers is only for illustrative purposes and a suitable number may be chosen that provides support for the cooking vessel and secures a certain distance to the cooking surface of the induction hob. As shown at 530 in Fig. 5, the spacers may also take the shape of concentric circles, the number and distance of these circles is only chosen to illustrate the shape e.g. only one circle may also be sufficient to support a kettle for boiling water on a cooking surface of an induction hob.

### List of reference numerals

- 100, 200:: induction cooking plate
- 105, 210 ,380,...,395:: induction cooking area
- 110,..., 120; 310,..., 370; 220;410:: thermally isolating spacers
- 125:: cooking area

- 220:: height of curvature
- 215:: cross-section through induction cooking plate
- 225:: width of curvature
- 400:: cooking vessel
- 410:: isolating bottom / spacer of cooking vessel
- 515,...,530:: shape of spacers of bottom of cooking vessel

## Claims

1. Induction cooking plate (100, 200) at least comprising:
- at least one induction cooking area (105, 210, 380, ..., 395), and
- at least one thermal isolation (110-128, 220, 310-370) at an exterior surface of the cooking plate (100, 200), **characterised in that**
the induction cooking plate (200) is provided with separate induction cooking areas (210), each having a border (125) formed of a curvature (125) around them, so that a cooking pot is kept at a certain distance to optimally insulate it from the exterior surface of the cooking plate (100, 200) while at the same time high frequency energy is allowed to be transmitted into the bottom of the cooking pot, wherein optionally said induction cooking area (210) comprises a layer of heat insulating material, so that a flat surface of the induction cooking plate (200) is provided.

2. Cooking plate (100, 200) according to claim 1, wherein the thermal isolation is implemented in a layer of a thermally isolating material (210) embedded in a cooking surface (105).

3. Induction cooking plate (100, 200) according to any of the previous claims comprising plural cooking areas (105, 210, 380, ..., 395) .

4. Induction cooking plate (100, 200) according to any of the claims 1 to 3, wherein the thermally isolation is provided in the form of thermal resistant material or glass ceramic.

## Patentansprüche

1. Induktionskochfeld (100, 200), mindestens umfassend:
- mindestens einen Induktionskochbereich (105, 210, 380, ..., 395), und
- mindestens eine thermische Isolierung (110-128, 220, 310-370) an einer Außenfläche des Kochfeldes (100, 200),
**dadurch gekennzeichnet, dass**
das Induktionskochfeld (200) mit getrennten Induktionskochbereichen (210) versehen ist, die jeweils einen Rand (125) aufweisen, der durch eine Wölbung (125) um sie herum gebildet ist, so dass ein Kochtopf in einem bestimmten Abstand gehalten wird, um ihn optimal von der Außenfläche des Kochfeldes (100, 200) zu isolieren, während gleichzeitig Hochfrequenzenergie in den Boden des Kochfeldes übertragen werden kann, wobei optional der Induktionskochbereich (210) eine Schicht aus wärmeisolierendem Material umfasst, so dass eine ebene Oberfläche des Induktionskochfeldes (200) bereitgestellt wird.

2. Kochfeld (100, 200) nach Anspruch 1, wobei die thermische Isolierung in einer in eine Kochfläche (105) eingebetteten Schicht aus einem wärmeisolierenden Material (210) realisiert ist.

3. Induktionskochfeld (100, 200) nach einem der vorhergehenden Ansprüche, umfassend mehrere Kochfelder (105, 210, 380, ..., 395) .

4. Induktionskochfeld (100, 200) nach einem der Ansprüche 1 bis 3, wobei die thermische Isolierung in Form von hitzebeständigem Material oder Glaskeramik vorgesehen ist.

## Revendications

1. Plaque de cuisson à induction (100, 200) comprenant au moins:
- au moins une zone de cuisson à induction (105, 210, 380, ..., 395), et
- au moins une isolation thermique (110-128, 220, 310-370) sur une surface extérieure de la plaque de cuisson (100, 200), **caractérisé en ce que**
la plaque de cuisson à induction (200) est munie de zones de cuisson à induction (210) séparées, chacune ayant une bordure (125) formée d'une courbure (125) autour d'elle, de sorte qu'une marmite est maintenue à une certaine distance pour l'isoler de manière optimale de la surface extérieure de la plaque de cuisson (100), 200) tout en permettant en même temps la transmission d'énergie à haute fréquence dans le fond de la marmite de cuisson, dans laquelle, en option, ladite zone de cuisson par induction (210) comprend une couche de matériau isolant thermique, de sorte qu'une surface plane de la plaque de cuisson par induction (200) est fournie.

2. Plaque de cuisson (100, 200) selon la revendication 1, dans laquelle l'isolation thermique est mise en oeuvre dans une couche d'un matériau thermiquement isolant (210) noyé dans une surface de cuisson (105).

3. Plaque de cuisson à induction (100, 200) selon l'une des revendications précédentes, comprenant plusieurs zones de cuisson (105, 210, 380, ..., 395).

4. Plaque de cuisson à induction (100, 200) selon l'une des revendications 1 à 3, dans laquelle l'isolation thermique est fournie sous la forme d'un matériau résistant à la chaleur ou d'une vitrocéramique.
